# EUROPÄISCHE PATENTSCHRIFT

(11) **EP 1 350 587 B1**
(45) Veröffentlichungstag und Bekanntmachung des Hinweises auf die Patenterteilung: **13.10.2004**
(21) Anmeldenummer: 03006699.7
(22) Anmeldetag: 26.03.2003
(51) Int. Cl.: B23F 21/22, B24B 3/34

(54) **Stabmesser mit variabler Kantenabrundung, Verwendung und Verfahren zur Bearbeitung**
Bar blade having variably rounded cutting edges, use and method of machining
Lame de coupe sous forme de barre, utilisation et procédé de traitement

(30) Priorität: 04.04.2002 DE 10214829
(43) Veröffentlichungstag der Anmeldung: 08.10.2003
(73) Patentinhaber: Klingelnberg AG, 8005 Zürich (CH)
(72) Erfinder: Giurgiuman, Horia Traian, 8037 Zürich (CH); Knaden, Manfred, 8050 Zürich (CH)
(74) Vertreter: Heusch, Christian

(56) Entgegenhaltungen:
- EP-A- 1 122 010
- WO-A-99/06180
- LAMERS N: "VERRUNDEN - BAUSTEIN DER AUTOMATISIERTEN WENDEPLATTENHERSTELLUNG" VDI Z, VDI VERLAG GMBH. DUSSELDORF, DE, Bd. 134, Nr. 2, Februar 1992 (1992-02), Seiten 1-4, XP002940513 ISSN: 0042-1766

## Beschreibung

Die Erfindung betrifft Stabmesser zur spanabhebenden Bearbeitung von Kegel- und Hypoidrädern.

### HINTERGRUND DER ERFINDUNG

Es gibt zahlreiche Bearbeitungsverfahren, bei denen ein Schneidwerkzeug zum Einsatz kommt.

Bei verschiedenen spanabhebenden Bearbeitungsprozessen kommt ein Werkzeug zur Anwendung, das aus Hartmetall besteht und eine oder mehrere Schneidkanten aufweist. Die Schneidkanten müssen speziell präpariert werden, um für einen spanabhebenden Bearbeitungsprozess geeignet zu sein. Eine geschärfte Schneidkante ist jedoch nicht nur beim Schneiden des Werkstückes, sondern auch beim Messen und beim Transport gefährdet. Dies liegt unter anderem daran, dass die verwendeten Hartmetalle spröde und damit die Schneidkanten sehr empfindlich sind.

Um die Widerstandsfähigkeit der Schneidkanten von Hartmetall-Wendeschneidplatten zu verbessern, werden diese gezielt verrundet, wobei die Grösse und Form der Verrundung von dem späteren Einsatz der Wendeplatte als Werkzeug abhängen. Das Kantenverrunden von Wendeschneidplatten ist aus der klassischen Fachliteratur über Zerspanung bekannt. Es ist zum Beispiel aus der Publikation mit Titel "Verrunden - Baustein der automatischen Wendeplattenherstellung", N. Lamers, VDI-Z, 134, 1992, Nr. 2, Februar, S. 59-62, beschrieben, dass man das Verrunden durch den Einsatz spezieller Bürsten erreichen kann. Die Rundungsform und -grösse ist auf der Freifläche und auf der Spanfläche unterschiedlich.

Zum Verrunden von Schneidplatten werden unter anderem auch Sandstrahlverfahren oder Erosionsverfahren angewendet.

Das Bestimmen einer geeigneten Verrundung ist für solche Schneidplatten unkritisch, die für klassische Zerspanungsverfahren (Drehen, Fräsen, Bohren usw.) eingesetzt werden, da die Form des abzuhebenden Spans, bzw. der Spanquerschnitt, bekannt und vor allem konstant ist.

Es gibt verschiedene Verschleissformen und -mechanismen, wie Kolkverschleiss auf der Spanfläche und Facettenverschleiss auf der Freifläche, die bei Schnellstahlwerkzeugen häufig zu beobachten sind. Derartige Formen des Verschleisses kündigen sich mit der Zeit an und enden in einem katastrophalen Verschleiss. Bei Hartmetall-Werkzeugen dagegen sind diese Verschleissformen nur selten zu beobachten. Ausbrüche und Zerbröckelungen treten bei Hartmetall-Werkzeugen plötzlich und ohne Vorwarnung auf. Derartige Ereignisse können nicht nur bei der Bearbeitung eines Werkstücks am Hartmetall-Werkzeug vorkommen, sondern auch beim Schleifen des Werkzeugs.

Im Gegensatz zu den klassische Zerspanungsverfahren (Drehen, Fräsen, Bohren usw.), kommen bei Verzahnungsprozessen Verzahnwerkzeuge zum Einsatz. Bei Verzahnungsprozessen sind die Zerspanverhältnisse anders als beim klassischen Zerspanungsverfahren. Es ist zum Beispiel weniger bekannt, wie der Querschnitt des erzeugten Spans aussehen wird. Typischerweise werden mehrere Stabmesser nacheinander eingesetzt, die eine Gruppe bilden, wobei jedes Stabmesser eine andere Flanke hat und unter anderen Zerspanungsbedingungen schneidet. Bei Verzahnwerkzeugen kann sich eine starke Ausbröckelung im Kopfbereich ergeben, wenn das Werkzeug bei unsachgemässer Handhabung nicht adäquat geschützt ist, oder wenn es nicht richtig eingesetzt wird.

Ein konventionelles Stabmesser weist einen Schaft und einen aktiven Teil auf. Der aktive Teil wird unter anderem als Schneidteil bezeichnet und weist mehrere Flächen auf. Die Schnittlinien der das Schneidteil begrenzenden Flächen werden Schneiden oder Schneidkanten genannt. Die Schneidkanten können gerade, geknickt oder gekrümmt sein.

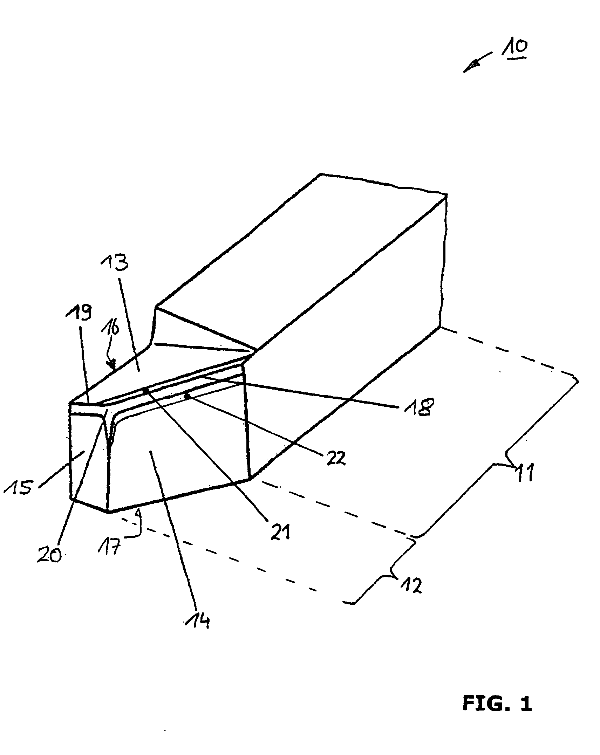

Ein Beispiel eines konventionellen Stabmessers 10 ist in Figur 1 gezeigt. Es umfasst einen Schaft 11 und einen aktiven Teil 12. Das gezeigte Stabmesser 10 weist insgesamt fünf Flächen im aktiven Teil 12 auf. Diese Flächen sind wie folgt bezeichnet: Spanfläche 13, Hauptfreifläche 14, Nebenfreifläche 15, Seitenfläche 16 (nicht in Figur 1 zu sehen) und Rückfläche 17 (nicht in Figur 1 zu sehen). Die Schnittlinien der den Schneidteil begrenzenden Flächen bilden die folgenden Schneidkanten: Hauptschneide 18 als Schnittlinie der Spanfläche 13 mit der Hauptfreifläche 14; Nebenschneide 19 als Schnittlinie der Spanfläche 13 mit der Nebenfreifläche 15. Im Bereich wo die Spanfläche 13 mit der Hauptfreifläche 14 und der Nebenfreifläche 15 zusammentreffen, findet sich eine Schneidenecke 20. Wird eine Freifläche im Bereich einer Schneide abgewinkelt, so nennt man den gefasten Bereich Freiflächenfase. Bei dem gezeigten Stabmesser 10 sind zwei Freiflächenfasen vorgesehen, nämlich eine Freiflächenfase 21 der Hauptschneide 18 und eine Freiflächenfase 22 der Nebenschneide 19. Beim Übergang der Spanfläche 13 in die Hauptschneide 18 ist im gezeigten Fall eine Spanflächenfase ausgebildet.

Das Werkzeug 10 wird entlang des zu bearbeitenden Werkstücks bewegt. Dabei wird ein Span erzeugt, der sich an der Spanfläche 13 vorbei schiebt. Die Hauptschneide 18 ist die Schneide, deren Schneidteil sich bei der Werkstückbearbeitung in Vorschubrichtung in das Werkstück schiebt. Eine Nebenschneide dagegen ist eine Schneide, die nicht in Richtung des Vorschubs weist.

Bei einer Relativbewegung des Stabmessers in Bezug auf ein Werkstück entsteht im Bereich des Schneidteils ein Span.

Aus der PCT-Patentanmeldung mit Publikationsnummer WO 99/06180 ist ein Verfahren zum Kantenverrunden eines Stabmessers mittels Bürsten bekannt. Mit einer rotierenden Bürste wird eine der Schneidkanten automatisch abgerundet. Die Bürstenverrundung der Schneidkanten gemäss dieser PCT-Patentanmeldung erfolgt nach dem Beschichten des Stabmessers. Durch das Bürstenverrunden erhält das Stabmesser an einer Schneidkante einen durch den Prozess nicht kontrollierbaren Radius.

Es ist eine Aufgabe der Erfindung die Standzeit eines Stabmessers zu erhöhen.

Die Aufgabe wird durch ein Stabmesser gemäss Anspruch 1 gelöst, bzw. durch eine Verwendung des Stabmessers gemäss Anspruch 8, oder ein Verfahren gemäss Anspruch 9.

Vorteilhafte Ausgestaltungen des erfindungsgemässen Stabmessers bilden die Gegenstände der Ansprüche 2 bis 7. Vorteilhafte Ausgestaltungen des erfindungsgemässen Verfahrens bildet der Anspruch 10.

### ZEICHNUNGEN

Ausführungsbeispiele der Erfindung werden im Folgenden unter Bezugnahme auf die Zeichnungen näher beschrieben. Es zeigen:
- **FIG. 1**: ein konventionelles Stabmesser;
- **FIG. 2**: ein Diagramm zur Darstellung der Verschleisstiefe als Funktion des Rundungsradius der Schneidkanten eines Stabmessers;
- **FIG. 3A-3C**: Diagramme zur Darstellung der spezifischen Schnittkraft in Abhängigkeit des Rundungsradius eines Stabmessers;
- **FIG. 4A-4B**: verschiedene Ansichten eines erfindungsgemässen Stabmessers;
- **FIG. 5A-C**: verschiedene Ansichten eines weiteren erfindungsgemässen Stabmessers.

### DETAILIERTE BESCHREIBUNG

Im Zusammenhang mit der vorliegenden Beschreibung werden Begriffe verwendet, die auch in einschlägigen Normen, zum Beispiel DIN Norm 6581, Verwendung finden. Es sei jedoch angemerkt, dass die Verwendung dieser Begriffe lediglich dem besseren Verständnis dienen sollen. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

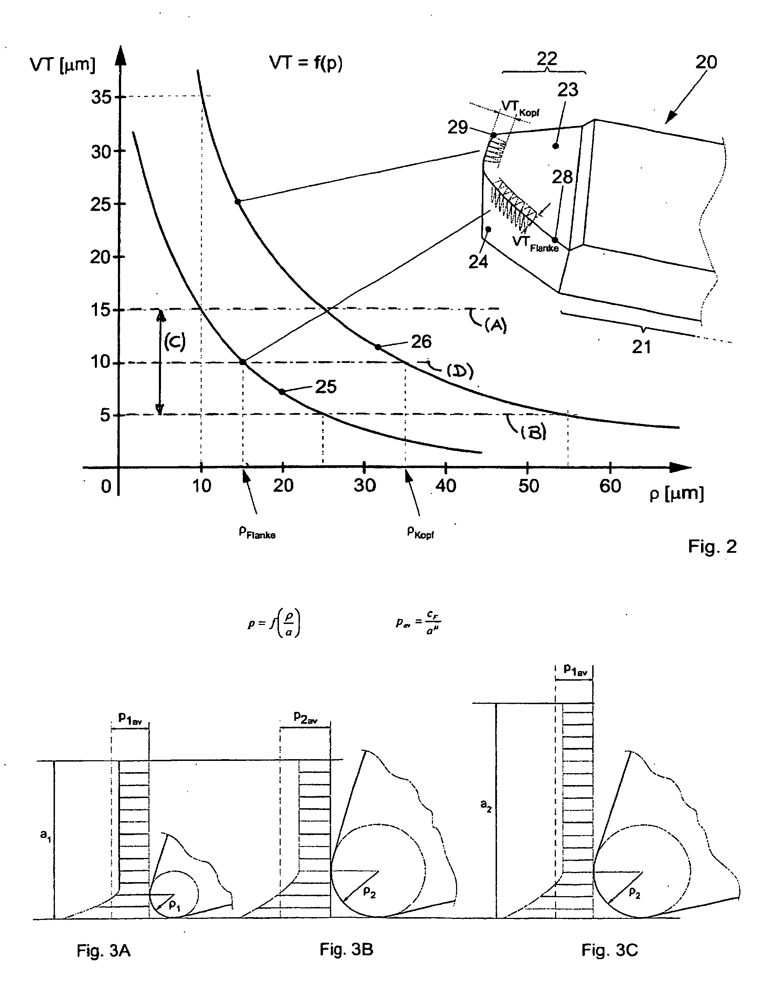

Neuere Untersuchungen haben ergeben, dass im Gegensatz zu den klassischen Zerspanungsverfahren, bei Verzahnungsprozessen Verzahnwerkzeuge (z.B. Stabmesser) eingesetzt werden sollten, deren Schneidkanten anders als die bekannten Schneidplatten präpariert sind. Der Hauptverschleiss bei einem Stabmesser tritt in der Regel im Kopfbereich (K) auf. In Figur 2 ist ein Diagramm gezeigt, dem exemplarisch einige Erfahrungswerte zu entnehmen sind. In dem Diagramm ist die Verschleisstiefe VT als Funktion des Schneidkanten-Radius ρ dargestellt. Das Stabmesser 20 weist einen Schaft 21 und einen aktiven Teil 22 auf. Das in Figur 2 andeutungsweise gezeigte Stabmesser 20 hat eine Spanfläche 23, eine Hauptfreifläche 24, an der Flanke eine Hauptschneide 28 und im Kopfbereich eine Kopfschneide 29. Die Kurve 25 zeigt als Beispiel die Verschleisstiefe VT_{Flanke} der Hauptschneide 28 und die Kurve 26 zeigt die Verschleisstiefe VT_{Kopf} der Kopfschneide 29. Erfahrungsgemäss gibt es für das gezeigte Stabmesser 20 bei einer Verschleisstiefe von ca. 15 µm einen kritischen Verschleisszustand, der in dem Diagramm als gestrichelte Line (A) gezeigt ist, die parallel zur ρ-Achse verläuft. Vorzugsweise verwendet man ein Stabmesser 20 so, dass die Verschleisstiefe VT zwischen ca. 5 µm und ca. 15 µm liegt. Die untere Grenze bei ca. 5 µm ist in dem Diagramm als gestrichelte Line (B) gezeigt, die parallel zur ρ-Achse verläuft. Man kann dem Diagramm in Figur 2 entnehmen, dass der Verschleiss an der Hauptschneide 28 kleiner ist als der Verschleiss an der Hauptschneide 29. Es ergibt sich für den Einsatz des Stabmessers 20 also ein Fenster (C) zwischen den beiden gestrichelten Linien.

Um die Standzeit des Stabmessers 20 zu verbessern, sollte idealerweise der Verschleiss entlang der bearbeitenden Schneidkanten 28 und 29 homogen sein. Aus dem Diagramm in Figur 2 lässt sich nun ableiten, dass man sich bei einer konstanten Verschleisstiefe VT auf einer Linie bewegt, die parallel zur ρ-Achse verläuft. Als Beispiel ist eine gestrichelte Line (D) bei VT=10 µm eingezeichnet. Daraus lässt sich ableiten, dass der Radius ρ im Bereich der Hauptschneide 28 kleiner sein sollte, als der Radius ρ im Bereich der Kopfschneide 29. Im gezeigten Beispiel ergibt sich ein Radius ρ_{Flanke} von ca. 16 µm und ein Radius ρ_{Kopf} von ca. 34 µm.

Die Figur 2 erweckt den Eindruck, als ob ein unendlich grosser Radius ρ zu einem Verschleiss "Null" führen würde. In diesem Zusammenhang spielen die Spanungsdicke und die spezifische Schnittkraft eine wesentliche Rolle. In den Figuren 3A - 3C sind drei verschiedene Zustände gezeigt, um die Begriffe der sogenannten spezifischen Schnittkraft ρ (daN/mm²) und der mittleren Schnittkraft *p*_{*av*} erklären zu können. Die spezifische Schnittkraft p ist ein Kriterium, das sehr gut geeignet ist, um die Zerspanbarkeit eines Werkzeugs beurteilen zu können. Im Prinzip ist die spezifische Schnittkraft *p* ein Ausdruck für die Kraft, die pro Millimeter Länge auf eine Schneidkante wirkt, d.h., die spezifischen Schnittkraft *p* sagt aus wie gross die Beanspruchung des Werkzeugs ist. Eine minimale und gleichbleibende spezifische Schnittkraft *p* entlang der aktiven Schneidkante wird zu einem minimalen und homogenen Verschleiss führen. Die spezifische Schnittkraft *p* hängt von dem Verhältnis des Rundungsradius ρ zur Spanungsdicke *a* bzw. zum Vorschub ab, wie mit der folgenden Gleichung gezeigt werden kann: *p*=*f*(ρ/*a*). Den Figuren 3A - 3C ist zu entnehmen, dass eine grössere Spanungsdicke (bzw. ein grösserer Vorschub) *a* und ein kleinerer Rundungsradius ρ die spezifische Schnittkraft *p* verringern, was die Standzeit des Werkzeuges positiv beeinflussen sollte. Die mittlere spezifischen Schnittkraft wird mit *p*_{*av*} bezeichnet. Die Erhöhung der Vorschübe ist aber technologisch begrenzt und die kleineren Rundungsradi ρ sind für den Schutz der Schneidkanten nicht geeignet. Wenn der Radius ρ gegen Null geht, dann wird das Werkzeug zerstört. Vergrössert man den Radius ρ, dann wird das zu bearbeitende Material gedrückt und nicht getrennt, d.h. es entsteht kein Span mehr. Es ist in diesem Sinne ein Kompromiss zwischen den zwei Tendenzen zu finden und das Verhältnis ρ/*a* zu optimieren.

Es ergibt sich aus diesen Betrachtungen, dass die bearbeitenden Schneidkanten insbesondere in den Bereichen geschützt werden sollten, wo sie der grössten Beanspruchung bzw. dem stärksten Verschleiss unterliegen. Kombiniert man diese Erkenntnisse, so ergibt sich ein Stabmesser bei dem gemäss Erfindung die Schneidkante im Kopfbereich (Kopfschneidkante) einen grösseren Radius aufweist als die Schneidkante im Bereich der Flanke (Hauptschneidkante). Mit dieser Erkenntnis kann ein optimal ausgelegtes Werkzeug bereitgestellt werden, dass einen homogenen Verschleiss entlang der Schneidkanten aufweist.

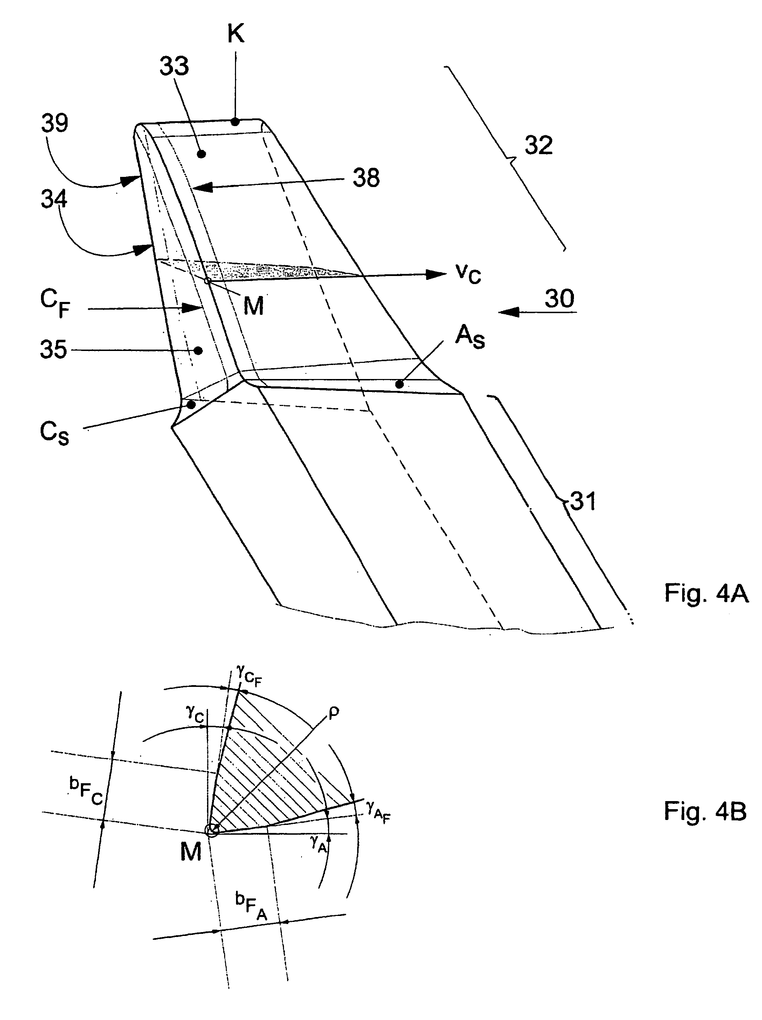

Ein erstes erfindungsgemässes Stabmesser 30 ist in den Figuren 4A und 4B gezeigt. Es weist einen Schaft 31 und einen aktiven Teil 32 auf. Der aktive Teil 32 besteht im Wesentlichen aus einer Hauptfreifläche 33, einer Nebenfreifläche 34 und einer Spanfläche 35. Im Kopfbereich (K) weist das Stabmesser 30 eine Kopfschneidkante 39 auf. Mindestens eine der Flächen 33, 34, 35 mündet in einer Hauptschneidkante 38 (auch Facette genannt) mit einer Geometrie, die bei einem spanabhebenden Bearbeitungsprozess wirksam ist. Gemäss Erfindung hat die Hauptschneidkante 38 einen kleineren Rundungsradius als die Kopfschneidkante 39. In Figur 4A ist auch die Schulter Aₛ der Hauptfreifläche 33 und die Schulter Cₛ der Spanfläche 35 zu sehen. Die Bewegungsrichtung des erzeugten Spans in Bezug auf das Stabmesser 30 ist in Figur 4A als Pfeil mit der Bezeichnung V_{C} angedeutet.

In Figur 4B ist ein Schnitt durch einen Teil des aktiven Bereiches 32 des Stabmessers 30 gezeigt. Die Winkel γ_{AF} und γ_{CF} werden Facettenwinkel und die Winkel γ_{A} bzw. γ_{C} Freiwinkel für den Zerspanprozess genannt.

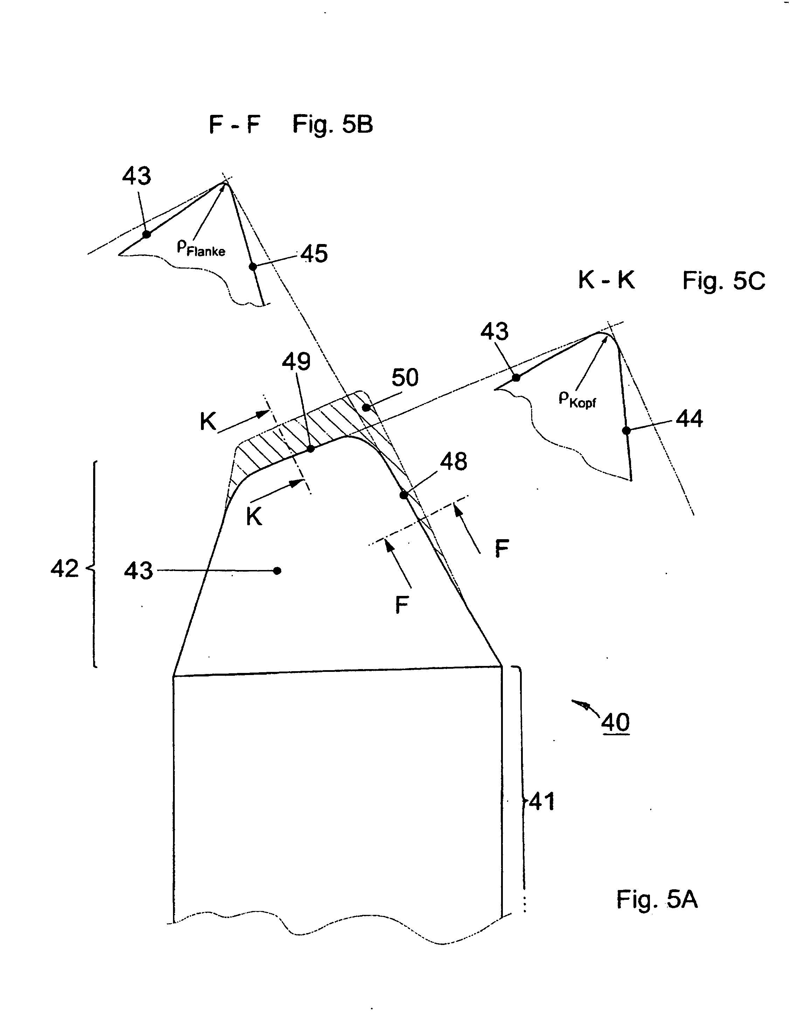

Ein weiteres erfindungsgemässes Stabmesser 40 ist schematisch in den Figuren 5A - 5C gezeigt. Das Stabmesser 40 weist einen Schaft 41 und einen aktiven Teil 42 auf. Der aktive Teil 42 weist eine Spanfläche 45, eine Hauptfreifläche 43 und eine Nebenfreifläche 44 auf. Die Spanfläche 45 bildet mit der Hauptfreifläche 43 eine Schnittlinie, die als Hauptschneidkante 48 bezeichnet wird. Im Kopfbereich (K) weist das Stabmesser 40 eine Kopfschneidkante 49 auf. Der Radius ρ_{F} der Hauptschneidkante 48 ist im Schnitt in Figur 5B gezeigt (Schnitt F-F). Der Radius ρ_{F} der Hauptschneidkante 48 ist kleiner als der Radius ρ_{Kopf} der Kopfschneidkante 49, der in Figur 5C (Schnitt K-K) gezeigt ist. Die Form des erzeugten Spans 50 ist in Figur 5A schematisch angedeutet.

Es können verschiedene Verfahren zur Kantenverrundung zur Anwendung gebracht werden, um die gemäss Erfindung geforderten Kantenrundungen an einem Stabmesser in kontrollierter Prozessführung zu erzeugen. Dabei ist es wichtig, dass die Reproduzierbarkeit gewährleistet ist. Gleichzeitig muss das Verfahren wirtschaftlich sein.

Als ein Verfahren zur Kantenverrundung kann das sogenannte Konditionierverfahren angewendet werden. Dabei kann man zum Beispiel in einem ersten Arbeitsgang die Kantenverrundung an der Kopfschneidkante 49 und in einem zweiten Schritt die Kantenverrundung an der Hauptschneidkante 48 ausbilden.

Vorzugsweise erfolgt gemäss Erfindung das Verrunden der Schneidkanten vor dem Beschichten des Stabmessers. Dadurch kann die Standzeit des Stabmessers weiter verbessert werden.

Ein Stabmesser gemäss Erfindung besteht vorzugsweise aus Materialien wie , Wolfram Karbid und Kobalt.

Bei einem Stabmesser gemäss Erfindung hängt der Rundungsradius ρ_{F} der Hauptschneidkante und der Rundungsradius ρ_{Kopf} der Kopfschneidkante von der Spanungsdicke und/oder von den Prozessbedingungen ab. Das Verhältnis zwischen ρ_{Kopf} und ρ_{F} kann durch Optimierungen festgelegt werden.

Ein Stabmesser gemäss Erfindung zeichnet sich dadurch aus, dass der Rundungsradius ρ_{F} der Hauptschneidkante um mindestens 20% und maximal um 80% kleiner ist als der Rundungsradius ρ_{Kopf} der Kopfschneidkante. Vorzugsweise beträgt der Rundungsradius ρ_{F} zwischen 40% und 70% des Rundungsradius ρ_{Kopf}. Es ist zu beachten, dass sich je nach Prozessbedingungen ein unterschiedliches Verhältnis zwischen ρ_{Kopf} und ρ_{F} ergeben kann.

In einer speziellen Ausführungsform der Erfindung weist das Stabmesser einen Rundungsradius ρ_{F} der Hauptschneidkante auf, der zwischen 10 µm und 50 µm beträgt.

Vorzugsweise sind die Hauptschneidkante und die Kopfschneidkante so ausgebildet, dass sie beim Bearbeiten eines Werkstücks einer gleichmässigen spezifischen Schnittkraft *p* unterliegen.

In einer weiteren Ausführungsform kann zusätzlich zu der Hauptschneidkante und der Kopfschneidkante mindestens eine weitere Schneidkante verrundet sein, wobei zum Beispiel die Hauptschneidkante und die weitere Schneidkante (z.B. die Nebenschneidkante) den gleichen Rundungsradius aufweisen können.

Die erfindungsgemässen Stabmesser eigenen sich besonders zur Verwendung in einem Verzahnungsprozess (Wälzen, Tauchen).

Es ist ein Vorteil der Erfindung, dass durch die Verbesserung der Standzeit eines Stabmessers die Wirtschaftlichkeit verbessert werden kann.

## Patentansprüche

1. Stabmesser (30; 40) mit einem Schaft (31; 41) und einem aktiven Teil (32; 42), der eine Hauptfreifläche (33; 43), eine Nebenfreifläche (34; 44), eine Spanfläche (35; 45) und eine Kopfschneidkante (39; 49) im Kopfbereich (K) aufweist, wobei mindestens eine der Flächen (33, 34,35; 43, 44,45) eine Hauptschneidkante (38; 48) mit einer Geometrie aufweist, die bei einem spanabhebenden Bearbeitungsprozess wirksam ist, **dadurch gekennzeichnet, dass** die Hauptschneidkante (38; 48) einen Rundungsradius (ρ_{F}) aufweist, der kleiner ist als der Rundungsradius (ρ_{Kopf}) der Kopfschneidkante (39; 49).

2. Stabmesser (30; 40) nach Anspruch 1, **dadurch gekennzeichnet, dass** es sich um ein Hartmetall-Stabmesser handelt.

3. Stabmesser (30; 40) nach Anspruch 1 oder 2, **dadurch gekennzeichnet, dass** das Verhältnis zwischen dem Rundungsradius (ρ_{F}) der Hauptschneidkante (38; 48) und dem Rundungsradius (ρ_{Kopf}) der Kopfschneidkante (39; 49) von der Spanungsdicke und/oder von Prozessbedingungen abhängt.

4. Stabmesser (30; 40) nach Anspruch 1, 2 oder 3, **dadurch gekennzeichnet, dass** der Rundungsradius (ρ_{F}) der Hauptschneidkante (38; 48) mindestens um 20% und maximal um 80% kleiner ist als der Rundungsradius (ρ_{Kopf}) der Kopfschneidkante (39; 49), wobei der Rundungsradius (ρ_{F}) der Hauptschneidkante (38; 48) vorzugsweise mindestens um 40% und maximal um 70% kleiner ist als der Rundungsradius (ρ_{Kopf}) der Kopfschneidkante (39; 49).

5. Stabmesser (30; 40) nach Anspruch 1, 2, 3 oder 4, **dadurch gekennzeichnet, dass** der Rundungsradius (ρ_{F}) der Hauptschneidkante (38; 48) zwischen 10 µm und 50 µm beträgt.

6. Stabmesser (30; 40) nach einem der vorhergehenden Ansprüche, **dadurch gekennzeichnet, dass** die Hauptschneidkante (38; 48) und die Kopfschneidkante (39; 49) so ausgebildet sind, dass sie beim Bearbeiten eines Werkstückes einer gleichmässigen spezifische Schnittkraft (*p*) unterliegen.

7. Stabmesser (30; 40) nach einem der vorhergehenden Ansprüche, **dadurch gekennzeichnet, dass** zusätzlich zu der Hauptschneidkante (38; 48) und der Kopfschneidkante (39; 49) mindestens eine weitere Schneidkante verrundet ist.

8. Verwendung eines Stabmessers (30; 40) gemäss einem der vorhergehenden Ansprüche zum Einsatz in einem Zerspanungsprozess.

9. Verfahren zum Bearbeiten eines Stabmessers (30; 40) mit einem Schaft (31; 41) und einem aktiven Teil (32; 42), der eine Hauptfreifläche (33; 43), eine Nebenfreifläche (34; 44), eine Spanfläche (35; 45) und eine Kopfschneidkante (39; 49) im Kopfbereich (K) aufweist, wobei mindestens eine der Flächen (33, 34,35'; 43, 44,45) eine Hauptschneidkante (38; 48) mit einer Geometrie aufweist, die bei einem spanabhebenden Bearbeitungsprozess wirksam ist, **dadurch gekennzeichnet, dass**
- anhand von Spanungsdicke und/oder Prozessbedingungen eine rechnerische Ermittlung des optimalen Verhältnisses zwischen dem Rundungsradius (ρ_{F}) der Hauptschneidkante (38; 48) und dem Rundungsradius (ρ_{Kopf}) der Kopfschneidkante (39; 49) vorgenommen wird, wobei die Hauptschneidkante (38; 48) einen Rundungsradius (ρ_{F}) aufweist, der kleiner ist als der Rundungsradius (ρ_{Kopf}) der Kopfschneidkante (39; 49), und dass
- der Rundungsradius (ρ_{F}) der Hauptschneidkante (38; 48) und der Rundungsradius (ρ_{Kopf}) der Kopfschneidkante (39; 49) gemäss dem ermittelten Verhältnis durch eine Verrundungsverfahren am Stabmesser (30; 40) erzeugt wird.

10. Verfahren nach Anspruch 9, **dadurch gekennzeichnet, dass** das Stabmesser (30; 40) nach dem Erzeugen der Rundungsradien beschichtet wird.

## Claims

1. Bar blade (30; 40) with a shaft (31; 41) and an active part (32; 42) having a main clearance face (33; 43), a secondary clearance face (34; 44), a chip face (35; 45) and a head cutting edge (39; 49) in the head zone (K), at least one of the faces (33, 34, 35; 43, 44, 45) having a main cutting edge (38; 48) with geometry suitable for a machining manufacturing process, **characterized in that** the main cutting edge (38; 48) has a radius of curvature (ρ_{F}) which is less than the radius of curvature (ρ_{head}) of the head cutting edge (39; 49).

2. Bar blade (30; 40) according to Claim 1, **characterized in that** the bar blade is a hard metal tool.

3. Bar blade (30; 40) according to Claim 1 or 2, **characterized in that** the ratio of the radius of curvature (ρ_{F}) of the main cutting edge (38; 48) to the radius of curvature (ρ_{head}) of the head cutting edge (39; 49) is dependent on chip thickness and/or process conditions.

4. Bar blade (30; 40) according to Claim 1, 2 or 3, **characterized in that** the radius of curvature (ρ_{F}) of the main cutting edge (38; 48) is at least 20% and at most 80% smaller than the radius of curvature (ρ_{head}) of the head cutting edge (39; 49), the radius of curvature (ρ_{F}) of the main cutting edge (38; 48) being preferably at least 40% and at most 70% smaller than the radius of curvature (ρ_{head}) of the head cutting edge (39; 49).

5. Bar blade (30; 40) according to Claim 1, 2, 3 or 4, **characterized in that** the radius of curvature (ρ_{F}) of the main cutting edge (38; 48) is between 10 µm and 50 µm.

6. Bar blade (30; 40) according to one of the above Claims, **characterized in that** the main cutting edge (38; 48) and the head cutting edge (39; 49) are so shaped that they are subjected to an equal specific cutting force (p) when machining a workpiece.

7. Bar blade (30; 40) according to one of the above Claims, **characterized in that** in addition to the main cutting edge (38; 48) and the head cutting edge (39; 49), at least one further cutting edge is rounded.

8. Utilization of a bar blade (30; 40) according to one of the above Claims for a machining process.

9. Procedure for preparing a bar blade (30; 40) with a shaft (31; 41) and an active part (32; 42), having a main clearance face (33; 43), a secondary clearance face (34; 44), a chip face (35; 45) and a head cutting edge (39; 49) in the head zone (K), at least one of the faces (33, 34, 35; 43, 44, 45) displaying a main cutting edge (38; 48) with a geometry suitable for a machining manufacturing process, **characterized in that**:
- on the basis of chip thickness and/or process conditions, a calculation is undertaken of the optimum ratio of the radius of curvature (ρ_{F}) of the main cutting edge (38; 48) to the radius of curvature (ρ_{head}) of the head cutting edge (39; 49), the main cutting edge (38; 48) displaying a radius of curvature (ρ_{F}) which is smaller than the radius of curvature (ρ_{head}) of the head cutting edge (39; 49), and
- the radius of curvature (ρ_{F}) of the main cutting edge (38; 48) and the radius of curvature (ρ_{head}) of the head cutting edge (39; 49) in accordance with the ratio calculated are obtained by means of a rounding process applied to the bar blade (30; 40).

10. Procedure according to Claim 9, **characterized in that** the bar blade (30; 40) is coated after the rounding operation has been performed.

## Revendications

1. Lame de coupe (30 ; 40) comprenant une queue (31 ; 41) et une partie active (32 ; 42), qui présente une face de dépouille principale (33 ; 43), une face de dépouille secondaire (34 ; 44), une face de coupe (35 ; 45) et une arête de coupe de tête (39 ; 49) sur la partie avant (K), dans laquelle au moins l'une des faces (33 ; 34 ; 35 ; 43 ; 44 ; 45) présente une arête de coupe principale (38 ; 48) avec une forme efficace lors d'un procédé d'usinage par enlèvement de copeaux, **caractérisée en ce que** l'arête de coupe principale (38 ; 48) présente un rayon d'arrondi (ρ_{F}) plus petit que le rayon d'arrondi (ρ_{Tête}) de l'arête de coupe de tête (39 ; 49).

2. Lame de coupe (30 ; 40) selon la revendication 1, **caractérisée en ce qu'**il s'agit d'une lame de coupe en métal dur.

3. Lame de coupe (30 ; 40) selon la revendication 1 ou 2, **caractérisée en ce que** le rapport entre le rayon d'arrondi (ρ_{F}) de l'arête de coupe principale (38 ; 48) et le rayon d'arrondi (ρ_{Tête}) de l'arête de coupe de tête (39 ; 49) dépend de l'épaisseur de coupe et/ou des conditions de procédure.

4. Lame de coupe (30 ; 40) selon la revendication 1, 2 ou 3, **caractérisée en ce que** le rayon d'arrondi (ρ_{F}) de l'arête de coupe principale (38 ; 48) est inférieur au moins de 20 % et au plus de 80 % au rayon d'arrondi (ρ_{Tête}) de l'arête de coupe de tête (39 ; 49), le rayon d'arrondi (ρ_{F}) de l'arête de coupe principale (38 ; 48) étant de préférence inférieur au moins de 40 % et au plus de 70 % au rayon d'arrondi (ρ_{Tête}) de l'arête de coupe de tête (39 ; 49).

5. Lame de coupe (30 ; 40) selon la revendication 1, 2, 3 ou 4, **caractérisée en ce que** le rayon d'arrondi (ρ_{F}) de l'arête de coupe principale (38 ; 48) mesure entre 10 et 50 µm.

6. Lame de coupe (30 ; 40) selon l'une des revendications précédentes, **caractérisée en ce que** l'arête de coupe principale (38 ; 48) et l'arête de coupe de tête (39 ; 49) sont formées de telle manière qu'elles sont soumises à un effort de coupe spécifique (p) homogène lors de l'usinage d'une pièce à usiner.

7. Lame de coupe (30 ; 40) selon l'une des revendications précédentes, **caractérisée en ce que**, en plus de l'arête de coupe principale (38 ; 48) et de l'arête de coupe de tête (39 ; 49), au moins une autre arête de coupe est arrondie.

8. Utilisation d'une lame de coupe (30 ; 40) selon l'une des revendications précédentes pour une mise en oeuvre lors d'une procédure par enlèvement de matière.

9. Procédé d'usinage d'une lame de coupe (30 ; 40) comprenant une queue (31 ; 41) et une partie active (32 ; 42), qui présente une face de dépouille principale (33 ; 43), une face de dépouille secondaire (34 ; 44), une face de coupe (35 ; 45) et une arête de coupe de tête (39 ; 49) sur la partie avant (K), au moins l'une des faces (33 ; 34 ; 35 ; 43 ; 44 ; 45) présentant une arête de coupe principale (38 ; 48) avec une forme efficace lors d'un procédé d'usinage par enlèvement de copeaux, **caractérisé en ce que**,
- en s'appuyant sur l'épaisseur de coupe et/ou les conditions de procédé, une détermination par le calcul du rapport optimal entre le rayon d'arrondi (ρ_{F}) de l'arête de coupe principale (38 ; 48) et le rayon d'arrondi (ρ_{Tête}) de l'arête de coupe de tête (39 ; 49) est effectuée, l'arête de coupe principale (38 ; 48) présentant un rayon d'arrondi (ρ_{F}) inférieur au rayon d'arrondi (ρ_{Tête}) de l'arête de coupe de tête (39 ; 49), et
- le rayon d'arrondi (ρ_{F}) de l'arête de coupe principale (38 ; 48) et le rayon d'arrondi (ρ_{Tête}) de l'arête de coupe de tête (39 ; 49) sont réalisés par un procédé d'arrondissage sur la lame de coupe (30 ; 40) conformément au rapport calculé.

10. Procédé selon la revendication 9, **caractérisé en ce que** la lame de coupe (30 ; 40) est enduite après la réalisation des rayons d'arrondi.
